# EUROPÄISCHE PATENTANMELDUNG

(11) **EP 1 614 559 A1**
(43) Veröffentlichungstag der Anmeldung: **11.01.2006**
(21) Anmeldenummer: 05014696.8
(22) Anmeldetag: 06.07.2005
(51) Int. Cl.: B60H 1/00, B60H 1/32

(54) **Klimagerät für mobile Einrichtungen**

(30) Priorität: 07.07.2004 DE 102004032920
(71) Anmelder: Truma Gerätetechnik GmbH & Co. KG, 85640 Putzbrunn (DE)
(72) Erfinder: Plank, Johan, 83125 Eggstätt (DE); Schütz, Thomas, 82396 Pähl (DE)
(74) Vertreter: Müller - Hoffmann & Partner

(57) **Zusammenfassung**

Ein Klimagerät weist einen Kühlkreislauf mit Bauelementen, wie z. B. einem Kompressor (1) zum Verdichten eines Kältemittels, einem Verflüssiger (3) und einem Verdampfer (9) auf. Wenigstens ein Teil der Bauelemente des Kühlkreislaufs wird von einer gemeinsamen Halterung in Form von Gehäuseschalen (20) in ihrer Funktionsstellung gehalten. Die Gehäuseschalen (20) bestehen aus einem geschäumten Kunststoffmaterial, z. B. aus expandiertem Polypropylen (EPP). Ein zusätzliches Blech- oder Kunststoffgehäuse ist nicht erforderlich.

## Beschreibung

Die Erfindung betrifft gemäß dem Oberbegriff von Patentanspruch 1 ein Klimagerät zum Kühlen eines Raumes.

Ein derartiges Klimagerät bzw. eine Klimaanlage eignet sich insbesondere auch zum Kühlen von Innenräumen von Caravans, Booten oder anderen, insbesondere mobilen Kleinräumen. Das der Luftkühlung zugrunde liegende Prinzip der Kälteerzeugung mittels eines Kühlkreislaufs ist seit langem bekannt.

Fig. 9 zeigt das Funktionsschema eines z. B. aus der DE 201 11 475 U1 bekannten Kühlkreislaufs bzw. Kälteprozesses, wie er bei zahlreichen Klimaanlagen Anwendung findet.

Ein Kompressor (Verdichter) 1 verdichtet ein gasförmiges Kältemittel und transportiert es über eine Kältemittelleitung 2 zu einem Verflüssiger (Kondensator) 3. Der als Wärmetauscher dienende Verflüssiger 3 wird durch Umgebungsluft gekühlt, die mittels eines Verflüssiger-Gebläses 4 über einen Umgebungslufteinlass 5 angesaugt und über einen Umgebungsluftauslass 6 ausgeblasen wird. Dadurch verflüssigt sich das zunächst gasförmige und unter einem hohen Druck stehende Kältemittel. Das flüssige und immer noch unter hohem Druck stehende Kältemittel wird über eine Kältemittelleitung 7 zu einer Expansionseinrichtung, z. B. einer Drossel 8 geführt, wo sich das Kältemittel entspannen kann.

Durch die Entspannung geht das Kältemittel in die gasförmige Phase über und entzieht dabei der Umgebung Wärme. Dieser Wärmeentzug wirkt über einen als Wärmetauscher dienenden Verdampfer 9 auf die Raumluft des zu kühlenden Raums, welche mittels eines Verdampfer-Gebläses 10 durch einen Raumlufteinlass 11 angesaugt, durch den Verdampfer 9 geführt und über einen oder mehrere Raumluftauslässe 12 wieder zurück in den zu kühlenden Raum als Kaltluft geblasen wird. Die Raumluft kann dabei vor dem Verdampfer 9 durch ein Filter 13 gereinigt werden.

Durch die Aufnahme der Wärme der zu kühlenden Raumluft wird das gasförmige Kältemittel erwärmt und über eine Kältemittelleitung 14 zurück zum Kompressor 1 gefördert. Dort wird das jetzt wieder gasförmige Kältemittel erneut komprimiert und der Kühlkreislauf in der oben beschriebenen Weise fortgeführt.

Die Komponenten eines derartigen Klimageräts werden üblicherweise in einem Gehäusekasten untergebracht, wie er ebenfalls in der DE 201 11 475 U 1 gezeigt ist. Der Gehäusekasten kann Wände aus Blech oder einem entsprechend stabilen Kunststoff aufweisen.

Ein derartiges Klimagerät hat sich in der Praxis hervorragend bewährt. Jedoch hat sich herausgestellt, dass es insbesondere hinsichtlich einer Gewichts- und Kostenersparnis noch weiter verbessert werden kann.

Der Erfindung liegt daher die Aufgabe zugrunde, ein Klimagerät anzugeben, das unter Beibehaltung der oben beschriebenen Funktionen weniger Gewicht aufweist und mit niedrigeren Kosten herstellbar ist.

Erfindungsgemäß wird die Aufgabe durch ein Klimagerät mit den Merkmalen von Patentanspruch 1 gelöst. Vorteilhafte Weiterentwicklungen der Erfindung sind in den abhängigen Ansprüchen definiert.

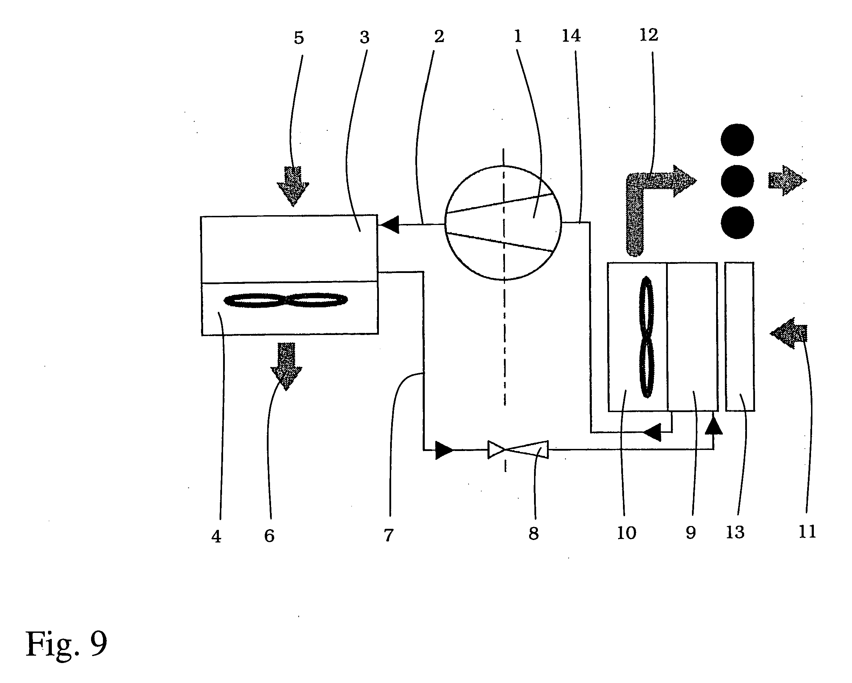

Ein erfindungsgemäßes Klimagerät ist dadurch gekennzeichnet, dass wenigstens ein Teil der Bauelemente des Kühlkreislaufs von einer gemeinsamen Halterung in ihrer Funktionsstellung gehalten werden, wobei die Halterung aus einem geschäumten Kunststoffmaterial besteht. Als Bauelemente sind dabei im Wesentlichen die oben unter Bezugnahme auf Fig. 9 beschriebenen Komponenten des Kühlkreislaufs zu verstehen, wobei auch Kältemittelleitungen oder elektrische Verbindungen berücksichtigt werden können.

Das geschäumte Kunststoffmaterial - insbesondere, wenn es sich um expandierendes bzw. expandiertes Polypropylen EPP handelt - weist hervorragende Festigkeitseigenschaften auf, so dass es die Bauelemente zuverlässig halten kann. Darüber hinaus ist es als Werkstoff vergleichsweise preiswert und - entsprechende Formen vorausgesetzt - einfach zu verarbeiten. Bei entsprechender Stückzahl, die sich vor allem bei Serienfertigung ergibt, lässt sich die Halterung zu sehr niedrigen Kosten durch Schäumen, Pressen oder/und Fräsen herstellen. Zudem weist das geschäumte Kunststoffmaterial hervorragende Wärmedämmungseigenschaften auf, die in Anbetracht der in und an dem Klimagerät auftretenden Temperaturdifferenzen von Vorteil sind. Das Kunststoffmaterial besitzt durch seine Schaumeigenschaft darüber hinaus eine ausgezeichnete Lärmdämmungswirkung, so dass die in dem Klimagerät durch den Kompressor, die Gebläse und die Luftströmung auftretenden Geräusche nur gedämpft nach außen dringen können.

Besonders vorteilhaft ist es, wenn die Halterung durch wenigstens zwei miteinander zusammenwirkende Schalen gebildet ist. Dann ist es möglich, die Bauelemente des Kühlkreislaufes zwischen den Schalen anzuordnen und durch die Schalen in der gewünschten Funktionsstellung zu fixieren.

Dazu kann es vorteilhaft sein, wenn die Schalen durch Bänder zusammengehalten werden. Die Bänder ermöglichen es, auf weitere Verbindungsmittel zwischen den Schalen zu verzichten.

Jedoch kann es gemäß einer Weiterentwicklung der Erfindung zweckmäßig sein, wenn eine Schale in einem Grenzbereich, in dem sie an eine andere Schale angrenzt, jeweils eine Rasteinrichtung aufweist, so dass die beiden Schalen zusammen verrastbar sind. Auf diese Weise kann zwischen den die Halterung bildenden Schalen eine z. B. formschlüssige Verbindung hergestellt werden, die gegebenenfalls weitere Befestigungsmittel überflüssig macht. Selbstverständlich können die Schalen aber zusätzlich noch durch weitere Mittel, z. B. die oben beschriebenen Bänder, Bestigungsschrauben oder Befestigungsdübel zusammengehalten werden.

Bei einer bevorzugten Ausführungsform der Erfindung weist die Rasteinrichtung eine aus dem geschäumten Kunststoffmaterial einstückig mit der zugehörigen Schale ausgebildete Zunge und/oder Nut auf. Wenn die Schalen jeweils mit Zungen oder Nuten ausgestattet sind, ist es sehr einfach möglich, die Schalen durch Zusammendrücken miteinander zu verrasten. Ein ähnliches Prinzip ist z. B. bei Kühlboxen bekannt, deren Öffnung durch einen verrastbaren Deckel geschlossen werden kann. Selbstverständlich jedoch sollten die die Schalen zusammen verbindenden Rasteinrichtungen robuster ausgeführt werden, um einen zuverlässigen Zusammenhalt zu gewährleisten.

Besonders vorteilhaft ist es, wenn die Halterung, insbesondere die zusammenwirkenden Schalen, Ausnehmungen und/oder Führungen aufweisen, in denen die Bauelemente im Wesentlichen formschlüssig gehalten sind. Die einzelnen Bauelemente des Kühlkreislaufs können dann bei der Montage des Klimageräts einfach in die Ausnehmungen eingesteckt oder gegebenenfalls eingerastet werden. Durch das Zusammenfügen der Schalen werden die Bauelemente zuverlässig in ihrer jeweiligen Position fixiert, so dass sie auch bei einem Stürzen des gesamten Geräts nicht aus ihren Ausnehmungen herausrutschen können. Ebenfalls können auch für Verbindungsleitungen, z. B. zur Förderung des Kältemittels, Ausnehmungen bzw. Aufnahmen oder Führungen in dem Schaummaterial der Halterung vorgesehen sein.

Bedingt durch die elastischen Eigenschaften des Kunststoffmaterials ist es möglich, dass die Bauelemente in den Ausnehmungen zusätzlich zu der prinzipiell formschlüssigen Fixierung auch noch federnd gehalten werden. Eine elastische Wirkung des Kunststoffmaterials wird sich nicht vollständig ausschließen lassen, so dass sie sich vielmehr zunutze gemacht werden kann, um die Bauelemente in der Halterung federnd einzurasten oder einzuklemmen.

Besonders vorteilhaft ist es, wenn die Halterung gleichzeitig auch ein Gehäuse des Klimageräts bildet, so dass die Schalen auch die Funktion von Gehäuseschalen übernehmen. Dann nämlich ist es möglich, auf ein zusätzliches Gehäuse, insbesondere auf ein herkömmliches Blech- oder Kunststoffgehäuse, zu verzichten. Die Halterung aus dem geschäumten Kunststoffmaterial bildet dann gleichzeitig ein vollständiges, funktionsfähiges Gehäuse, was die kosten- und gewichtsaufwändige Bereitstellung eines separaten Gehäuses überflüssig macht. Vielmehr kann das Klimagerät mit der Halterung als Außenhaut als eine Einheit in einer mobilen Einrichtung, z. B. einem Wohnmobil oder einem Wohnwagen, eingebaut werden.

Die vielfältigen Gestaltungsmöglichkeiten der geformten Schalen lassen weitere Vereinfachungen durch Integration von Funktionen zu. So ist es bei einer besonders vorteilhaften Ausführungsform der Erfindung möglich, dass wenigstens ein Teil einer Innenseite von einer Schale einen Teil eines Luftführungskanals für die Umgebungsluft oder die Raumluft bildet. Wesentliche Teile der Luftführungskanäle im Inneren des Klimageräts können somit durch die Schalen selbst gebildet werden.

Weiterhin kann ein Antrieb in der Halterung gehalten werden, der das Verflüssiger-Gebläse und/oder das Verdampfer-Gebläse antreibt. Zur Begrenzung der Kosten kann es dabei interessant sein, dass das Verflüssiger-Gebläse und das Verdampfer-Gebläse durch einen gemeinsamen Antrieb angetrieben werden.

Vorzugsweise ist eine der Schalen eine Unterschale, an deren Unterseite Öffnungen zum Zu- und Abführen der Umgebungsluft vorgesehen sind. Dies ermöglicht die in der DE 201 11 475 U1 beschriebene Gestaltung, bei der die vom Klimagerät für die Wärmeabfuhr erwärmte Umgebungsluft nach unten, durch den Boden eines Reisemobils abgegeben werden kann.

Ebenfalls ist es möglich, in der Unterschale eine Kondensatwanne auszubilden, in der sich Feuchtigkeit sammeln kann, die sich insbesondere an dem Verdampfer niederschlägt.

Die Ausgestaltung eines Klimageräts in der erfindungsgemäßen Weise gewährt erhebliche Vorteile: Durch den Wegfall eines klassischen Gehäuses können erhebliche Kosten gespart werden. Der Kostenvorteil wird dadurch noch verbessert, dass bei der Herstellung Verpackungsmaterial eingespart werden kann, das üblicherweise dadurch erforderlich wird, dass das Klimagerät vom Hersteller des Klimageräts nicht direkt in seinem endgültigen Einbauort eingebaut wird, sondern vielmehr in aufwändiger Weise verpackt und zu einem Kunden transportiert werden muss, der dann den Einbau vornimmt. Bei dem erfindungsgemäßen Klimagerät stellt die Halterung gleichzeitig auch das Gehäuse und die Verpackung dar.

Weiterhin lässt sich erhebliches Gewicht einsparen. Durch optimierte, insbesondere geglättete und gerundete Luftwege treten geringere Strömungsgeräusche auf. Trotzdem im Inneren des Klimageräts entstehende Geräusche werden durch die möglichst vollständig schließenden Schalen gedämpft. Durch das einfache Einstecken der Bauelemente und deren formschlüssige Aufnahme in der Halterung lässt sich der Montageaufwand deutlich reduzieren. Eventuell bei der Herstellung der Halterung auftretende Fertigungstoleranzen sind unproblematisch, da die Elastizität des geschäumten Kunststoffmaterials einen großzügigen Ausgleich zulässt.

Diese und weitere Vorteile und Merkmale der Erfindung werden nachfolgend unter Zuhilfenahme der begleitenden Figuren näher erläutert. Es zeigen:
- **Fig. 1**: eine Perspektivansicht eines erfindungsgemäßen Klimageräts in geöffnetem Zustand;
- **Fig. 2**: eine Perspektivansicht des Klimageräts von Fig. 1 aus anderer Richtung;
- **Fig. 3**: eine Perspektivansicht des Klimageräts von Fig. 1 in geschlossenem, zusammengebautem Zustand;
- **Fig. 4**: eine Perspektivansicht einer zweiten Ausführungsform des erfindungsgemäßen Klimageräts;
- **Fig. 5**: eine Untersicht des Klimageräts von Fig. 4;
- **Fig. 6**: eine Perspektivansicht eines geöffneten Klimageräts bei einer dritten Ausführungsform der Erfindung;
- **Fig. 7**: eine Perspektivansicht einer Unterschale des Klimageräts von Fig. 6;
- **Fig. 8**: eine Perspektivansicht der Innenseite einer Oberschale des Klimageräts von Fig. 6; und
- **Fig. 9**: ein Funktionsschema eines bekannten Kühlkreislaufs.

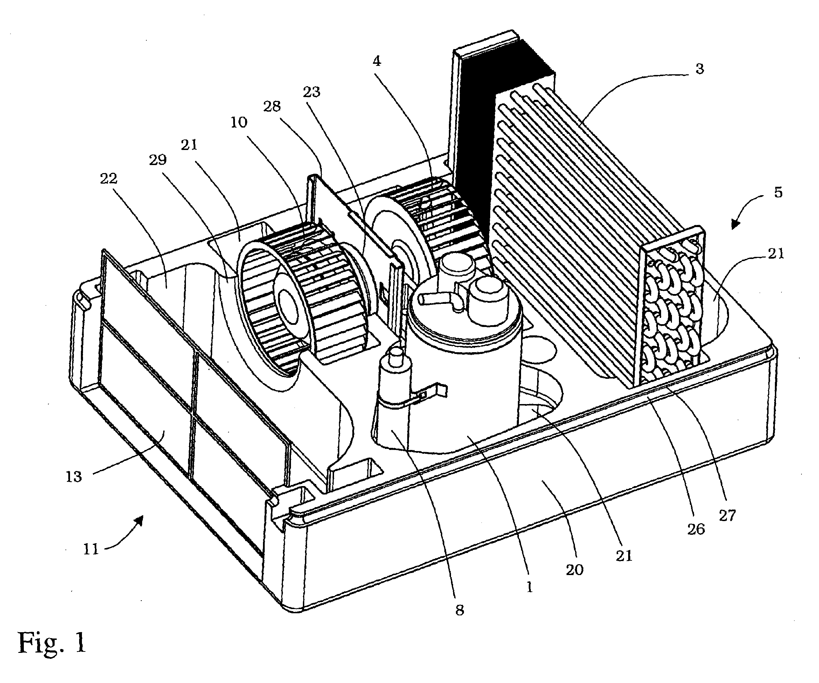

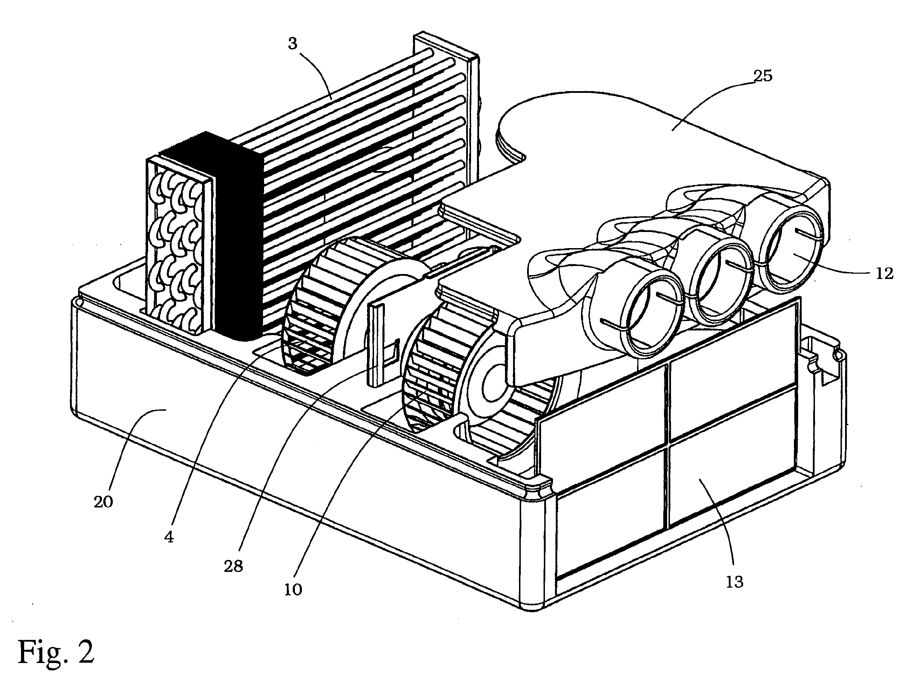

Die Fig. 1 bis 3 zeigen Perspektivansichten einer ersten Ausführungsform der Erfindung in unterschiedlichen Zusammenbauzuständen. Da weiter oben bereits allgemein ein Kühlkreislauf unter Bezugnahme auf die Fig. 9 erläutert wurde, werden zur Vereinfachung die gleichen Bezugszeichen wie bei Fig. 9 verwendet.

In einer einen Teil einer erfindungsgemäßen Halterung bildenden Unterschale 20 sind wesentliche Komponenten (Bauelemente) des Kühlkreislaufs in mehrere Ausnehmungen 21 bzw. Vertiefungen oder Führungen eingesteckt. Zu den Komponenten des Kühlkreislaufs gehören insbesondere ein zum Verdichten des Kältemittels dienender Kompressor 1, ein als Verflüssiger (Kondensator) 3 dienender Wärmetauscher, ein Verflüssiger-Gebläse 4, ein Verdampfer-Gebläse 10 und eine Drossel 8. Ein für die Funktion des Klimageräts erforderlicher, als Verdampfer (entsprechend Bezugszeichen 9 in Fig. 9) dienender Wärmetauscher ist in den Fig. 1 bis 3 nicht dargestellt. Er ist in einer Verdampfer-Ausnehmung 22 zu platzieren. Vor dem Verdampfer kann ein Filter 13 zur Reinigung der über einen Raumlufteinlass 11 angesaugten Raumluft angeordnet werden.

Hinsichtlich der an sich bekannten Funktionsweise des Klimageräts sei auf die obige Beschreibung in Zusammenhang mit Fig. 9 verwiesen.

Die beiden Lüfterräder des Verflüssiger-Gebläses 4 und des Verdampfer-Gebläses 10 werden durch einen gemeinsamen Antrieb 23 angetrieben.

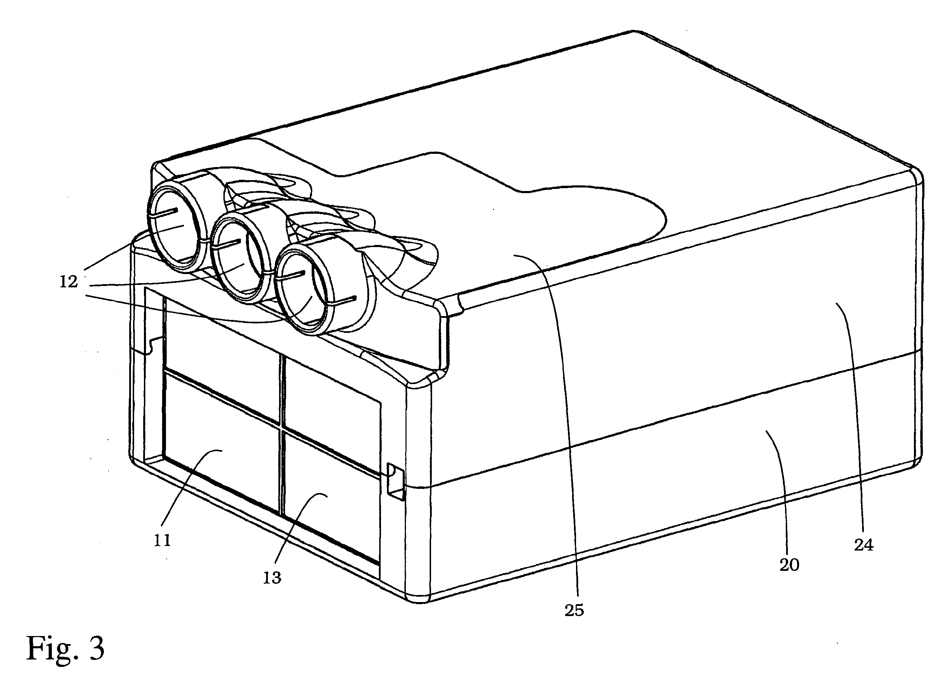

Wie Fig. 3 zeigt, ist auf der Unterschale 20 eine Oberschale 24 positioniert, in die ein als Anschlussschale 25 dienendes weiteres Schalenelement eingesetzt ist. Die Schalen 20, 24, 25 sind aus einem geschäumten Kunststoffmaterial, vorzugsweise aus expandiertem Polypropylen EPP, hergestellt. Jedoch können auch andere geschäumte Kunststoffmaterialien zur Anwendung kommen, sofern sie die erforderliche Festigkeit, Dichtheitsanforderung (für Wasser und Luft) und Passgenauigkeit gewährleisten.

Die Schalenelemente 20, 24 und 25 sind derart ineinander gepasst, dass sie zusammen einen geschlossenen Gehäusekasten bilden, wie Fig. 3 zeigt. Auf diese Weise muss das Klimagerät nicht in konventioneller Weise in einem Gehäusekasten aus Blech oder aus blechähnlichen Kunststoffwänden untergebracht werden. Die Schalen 20, 24 und 25 übernehmen die Gehäusefunktion vollständig, wobei die Anschlussschale 25 nicht unbedingt als Halterung dienen muss.

Weiterhin dienen insbesondere die Unterschale 20 und die Oberschale 24 als Halterung für die Komponenten des Kühlkreislaufs. Wie oben bereits anhand von Fig. 1 gezeigt, sind die einzelnen Komponenten in die jeweiligen Ausnehmungen 21, 22 der Unterschale 20 eingesteckt. Die Oberschale 24 weist entsprechend passende Ausnehmungen auf, so dass die Oberschale 24 auf die Unterschale 20 aufgesetzt werden kann und dadurch die Bauelemente jeweils in ihrer endgültigen Funktionsstellung gehalten werden.

Um eine zuverlässige Verbindung wenigstens zwischen der Unterschale 20 und der Oberschale 24 zu erreichen, sind jeweils Rasteinrichtungen in Form von Nuten 26 und die Zungen 27 am Rand der Schalen 20, 24 vorgesehen. Die .Nuten 26 und Zungen 27 sind so gestaltet, dass eine Zunge 27 von einer Schale in die Nut 26 der anderen Schale eingreifen kann. Da das Schaumstoffmaterial elastisch ist, federn die Zungen 27 in die zugehörigen Nuten 26 ein, so dass die Unterschale 20 schließlich mit der Oberschale 24 formschlüssig verbunden ist. Sofern erforderlich, kann dieser Zustand durch weitere Sicherungselemente gesichert werden, wie später noch erläutert wird.

Die in die Oberschale 24 eingesetzte Anschlussschale 25 weist drei als Raumluftauslass 12 dienende, in Fig. 3 gezeigte Öffnungen auf, durch die die von dem Verdampfer 9 gekühlte Luft durch das Verdampfer-Gebläse 10 in den zu kühlenden Raum geblasen werden kann. An die Raumluftauslässe 12 können z. B. auch schlauchförmige Kaltluftleitungen angeschlossen werden.

In der Unterschale 20 ist vor dem Verflüssiger 3 ein in den Fig. 1 bis 3 nicht dargestellter Umgebungslufteinlass 5 ausgebildet, so dass zur Wärmeabfuhr benötigte Umgebungsluft über den Boden der Unterschale 20 durch das Verflüssiger-Gebläse 4 angesaugt und durch den Verflüssiger 3 geführt werden kann. Die von dem Verflüssiger 3 erwärmte Umgebungsluft kann dann über einen ebenfalls in den Figuren nicht erkennbaren, unterhalb des Lüfterrades des Verflüssiger-Gebläses 4 vorgesehenen Umgebungsluftauslass 6 nach unten ausgeblasen werden.

Der Antriebsmotor 23 für die beiden Gebläse 4, 10 ist an einer Stützwand 28 befestigt, die ebenfalls zwischen der Unterschale 20 und der Oberschale 24 gehalten wird.

Zwischen der Verdampfer-Ausnehmung 22 und dem Lüfterrad des Verdampfer-Gebläses 10 ist eine Wandung der Unterschale 20 in Form einer Einsaugdüse 29 gestaltet, um den Luftdurchtritt strömungsmäßig möglichst wenig zu beeinträchtigen.

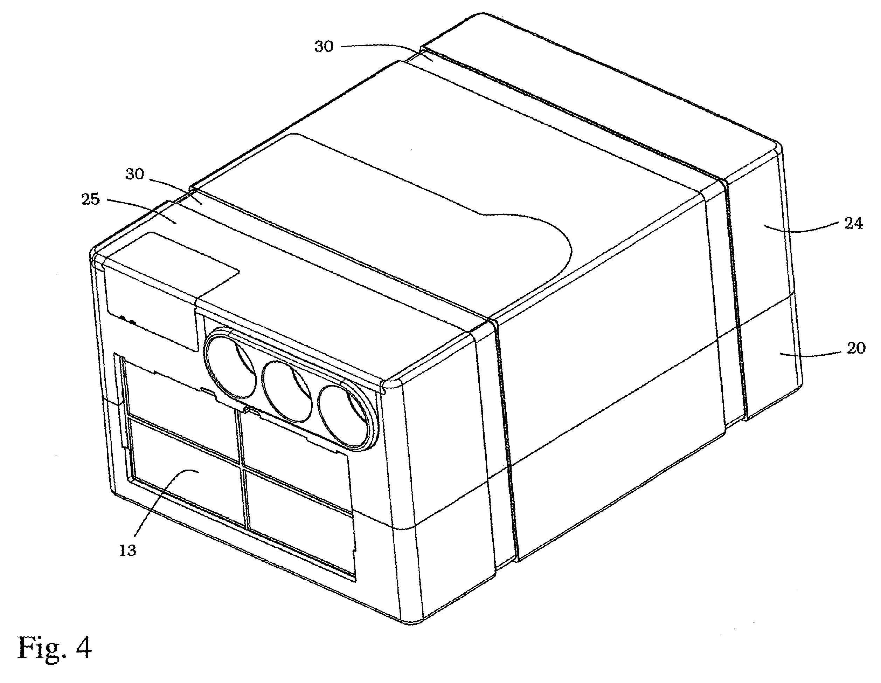

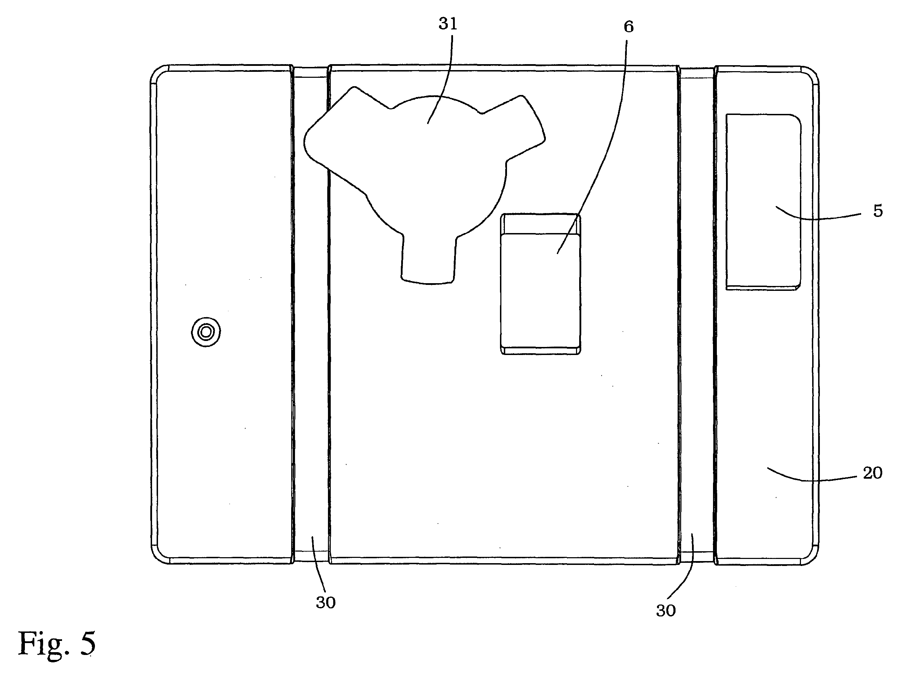

In den Fig. 4 und 5 ist eine Perspektiv- bzw. Untersicht einer zweiten Ausführungsform der Erfindung gezeigt. Zur Vereinfachung werden die gleichen Bezugszeichen wie bei den Fig. 1 bis 3 und der Fig. 9 verwendet, obwohl einzelne Bauelemente eine abweichende Gestaltung aufweisen können.

Im Unterschied zu der in den Fig. 1 bis 3 gezeigten Ausführungsform des erfindungsgemäßen Klimageräts werden bei der zweiten Ausführungsform die Unterschale 20 und die Oberschale 24 durch nicht dargestellte Bänder zusammengehalten, die in entsprechende Bänderführungen 30 eingesetzt werden können, die auf den Außenseiten der Schalen 20, 24 ausgebildet sind. Bei den Bändern kann es sich um Kunststoff- oder Metallbänder handeln, die leicht montierbar und hinsichtlich ihrer Länge einstellbar sein sollten.

Mit den Bändern ist es möglich, das gesamte Gerät auf einer Bodenplatte z. B. eines Reisemobils zu befestigen. Auf der Bodenplatte können entsprechende Haltewinkel vorgesehen sein.

In Fig. 5 sind ergänzend auch noch der Umgebungslufteinlass 5 und der Umgebungsluftauslass 6 an der Unterseite der Unterschale 20 zu erkennen.

Mit Bezugszeichen 31 ist ein optionales Blech an der Unterseite der Unterschale 20 gekennzeichnet, das von außen an die Unterschale 20 geschraubt werden kann, um den darüber angeordneten Kompressor 1 zusätzlich zu fixieren. Diese zusätzliche Befestigung des Kompressors 1 kann erforderlich sein, wenn es technisch schwierig sein sollte, den Kompressor 1 im Inneren der Unterschale ausreichend durch das geschäumte Kunststoffmaterial zu halten.

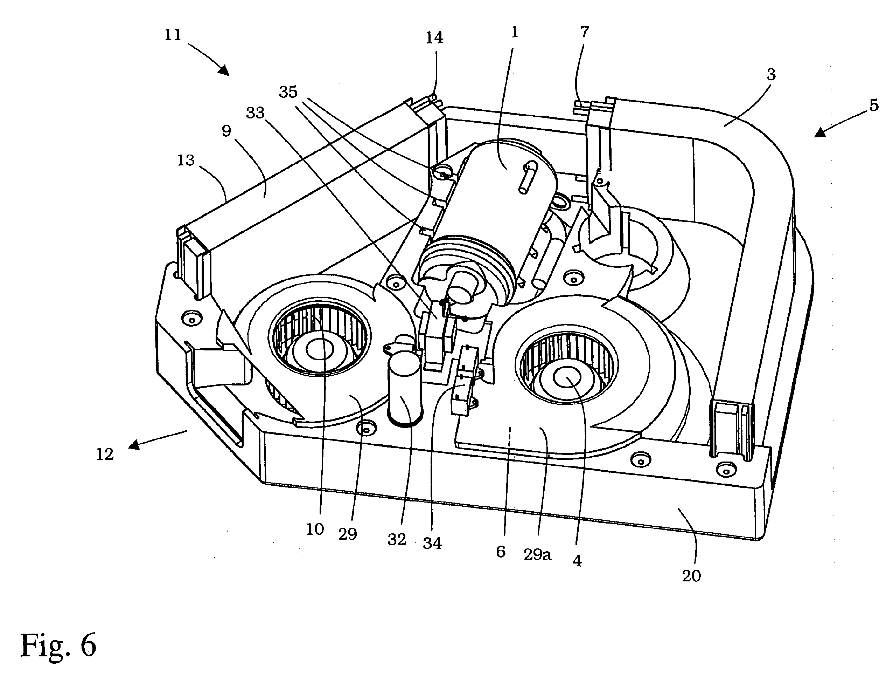

In den Fig. 6 bis 8 wird eine dritte Ausführungsform der Erfindung gezeigt, bei der das der Erfindung zugrunde liegende Prinzip beibehalten ist. Lediglich die Gestaltung und Anordnung der einzelnen Bauelemente des Kühlkreislaufes wurde geändert. Zur Vereinfachung werden jedoch auch hier die bisher verwendeten Bezugszeichen beibehalten.

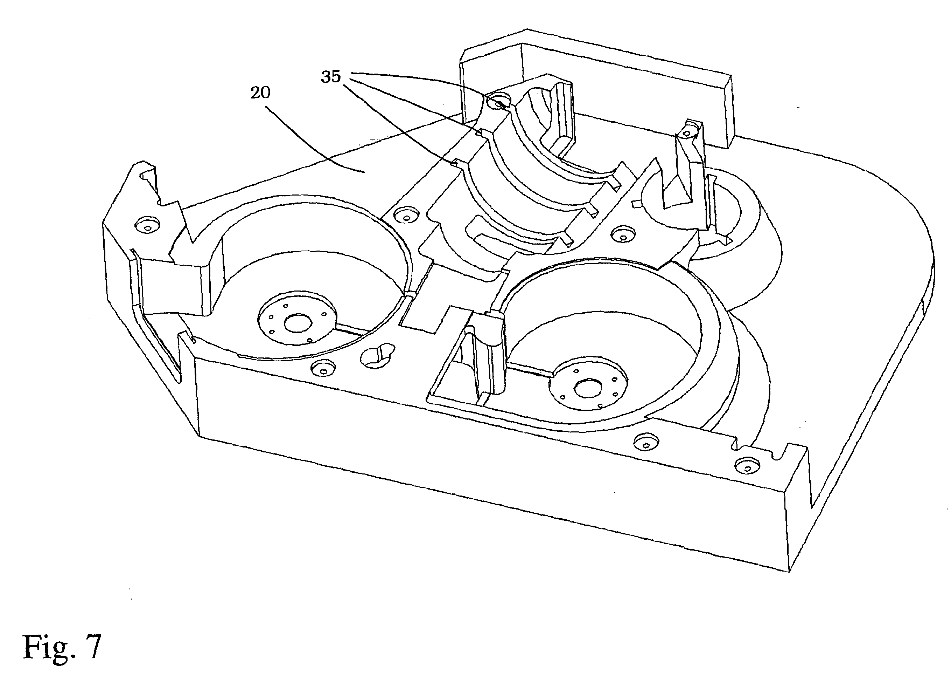

Fig. 7 zeigt die Unterschale 20 aus expandiertem Polpropylen EPP mit den verschiedenen Ausnehmungen, in die die Bauelemente eingesteckt werden können.

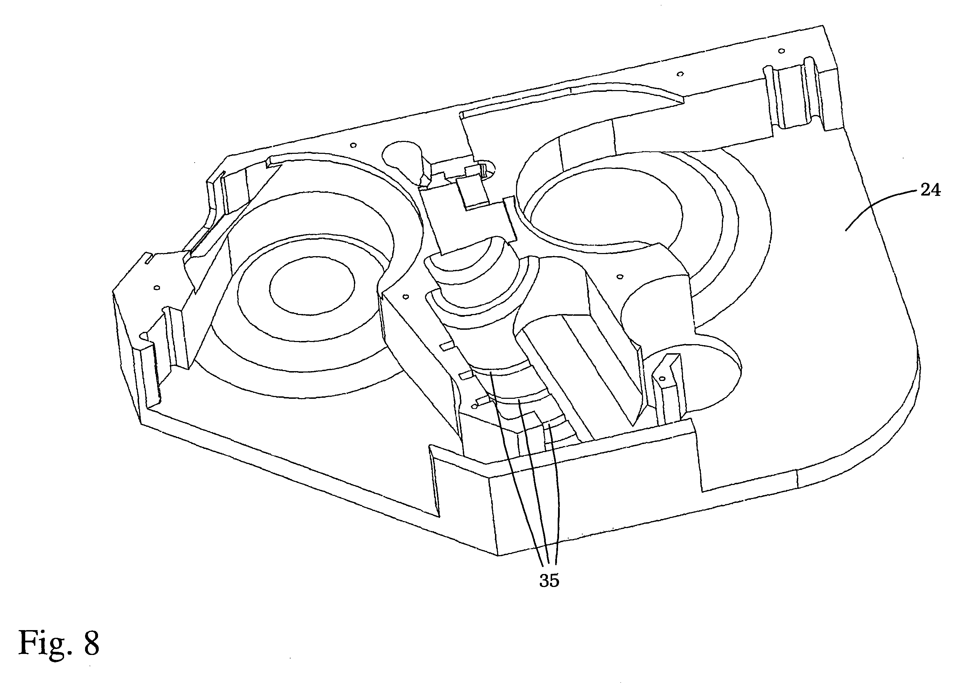

Dementsprechend zeigt Fig. 8 die Innenansicht der Oberschale 24 mit den korrespondierenden Ausnehmungen.

In die Unterschale 20 sind das Verflüssiger-Gebläse 4 und das Verdampfer-Gebläse 10 in Form von Radiallüftern eingesetzt. Weiterhin ist ein Kompressor 1 vorgesehen.

Der Verflüssiger 3 ist nur schematisch dargestellt und bildet einen Teil einer gekrümmten Wandung des Geräts. Die Umgebungsluft kann über den nach außen gerichteten Umgebungslufteinlass 5 angesaugt, durch den Verflüssiger 3 geführt und über das Verflüssiger-Gebläse 4 und den Umgebungsluftauslass 6 wieder nach unten ausgeführt werden.

Auf der von der Verflüssiger-Seite getrennten Verdampfer-Seite ist ein Wärmetauscher in Form eines schematisch dargestellten Verdampfers 9 derart eingesetzt, dass er einen Teil einer Wandung des Klimageräts bildet. Vor dem Verdampfer 9 kann ein Filter 13 angeordnet werden. Die zu kühlende Raumluft wird über den Raumlufteinlass 11 und das Filter 13 durch den Verdampfer 9 aufgrund der Wirkung des Verdampfer-Gebläses 10 angesaugt. Sie strömt über die Einsaugdüse 29 durch das Verdampfer-Gebläse 10 und wird als gekühlte Luft über den Raumluftauslass 12 ausgeblasen. Die Einsaugdüse 29 kann ebenfalls als Frästeil oder Pressteil aus expandiertem Polypropylen hergestellt werden. Auch auf der Oberseite des Verflüssiger-Gebläses 4 muss eine der Einsaugdüse 29 entsprechende Einlaufdüse 29a platziert werden.

Die Luftführungswege im Inneren der Unterschale 20 und der Oberschale 24 sind derart voneinander abgetrennt, dass keine Luft aus dem Verflüssiger-Bereich (rechter Teil von Fig. 6) zu dem Verdampfer-Bereich (linker Teil von Fig. 6) und umgekehrt gelangen kann. Vielmehr gewährt das geschäumte Kunststoffmaterial eine hervorragende Wärmedämmung zwischen den in dem Klimagerät herrschenden unterschiedlichen Temperaturbereichen.

In die Schalen 20, 24 können weitere Bauelemente, wie z.B. Betriebskondensatoren 32 für den Kompressor 1, eine elektrische Drossel 33 für den Verdichter oder elektrische Kondensatoren 34 für die Gebläse 4, 10 eingesetzt werden.

In den Figuren 6 bis 8 sind Nuten 35 erkennbar, die in der Unterschale 20 oder der Oberschale 24 ausgebildet sind. In die Nuten 35 können Dämpfungselemente eingesetzt werden, mit denen der an der entsprechenden Stelle anzuordnende Kompressor 1 gegenüber den Schalen 20, 24 schwingungsentkoppelt wird. Auf diese Weise wird der Kompressor 1 in den Schalen 20, 24 schwingungsgedämpft gelagert, so dass der vom Kompressor 1 erzeugte Schall gemindert werden kann. Als Dämpfungsmaterialien zum Einsetzen in die Nuten 35 eignen sich z. B. Streifen, Blöcke oder Keile aus PU oder ähnlichen Materialien.

Die Erfindung wurde oben anhand eines Klimageräts zum Kühlen eines Raumes beschrieben. Bei einer besonders vorteilhaften Weiterentwicklung der Erfindung kann jedoch das Klimagerät wahlweise auch noch als Raumheizung genutzt werden. Für diesen Zweck ist eine geeignete Ventileinrichtung, z. B. ein 4-WegeVentil, in dem Klimagerät vorgesehen, mit dem der Kältemittelkreislauf umgekehrt werden kann. Das bedeutet, dass sich die Strömung des Kältemittels durch die Wärmetauscher (Verflüssiger 3, Verdampfer 9) je nach Stellung der Ventileinrichtung umkehren lässt, so dass die beiden Wärmetauscher ihre Funktion wechseln. Auf diese Weise ist es möglich, der Umgebung über den von der Umgebungsluft durchströmten Wärmetauscher (jetzt: Verdampfer 3) Wärme zu entziehen und an die Raumluft über den jetzt als Verflüssiger arbeitenden Wärmetauscher 9 abzugeben.

Mit Hilfe von einfachen Bauelementen, wie z. B. der oben beschriebenen Ventileinrichtung und zusätzlichen Rückschlagventilen, Leitungen und Drosseln ist es somit sehr einfach möglich, das zunächst als reine Klimaanlage konzipierte Klimagerät auch noch mit einer Wärmepumpenfunktion zum Beheizen des Raumes auszustatten. Das Klimagerät eignet sich dann in hervorragender Weise zum Einbau in Reisemobilen, Wohnwagen, kleinen Hütten und z. B. Booten.

## Patentansprüche

1. Klimagerät zum Kühlen eines Raumes, mit einem Kühlkreislauf, der als Bauelemente
- einen Kompressor (1) zum Verdichten eines Kältemittels,
- einen Verflüssiger (3) mit einem zugeordneten Verflüssiger-Gebläse (4) zum Zu- und Abführen von Umgebungsluft,
- eine Expansionseinrichtung (8) zum Expandieren des Kältemittels, und
- einen Verdampfer (9) mit einem zugeordneten Verdampfer-Gebläse (10) zum Zu- und Abführen von Raumluft des zu kühlenden Raumes
aufweist,
**dadurch gekennzeichnet, dass**
- wenigstens ein Teil der Bauelemente des Kühlkreislaufs von einer gemeinsamen Halterung (20, 24) in ihrer Funktionsstellung gehalten werden,
- die Halterung (20, 24) aus einem geschäumten Kunststoffmaterial besteht.

2. Klimagerät nach Anspruch 1, **dadurch gekennzeichnet, dass** das Kunststoffmaterial expandiertes Polypropylen (EPP) ist.

3. Klimagerät nach Anspruch 1 oder 2, **dadurch gekennzeichnet, dass** die Halterung durch wenigstens zwei miteinander zusammenwirkende Schalen (20, 24) gebildet ist.

4. Klimagerät nach Anspruch 3, **dadurch gekennzeichnet, dass** die Schalen (20, 24) durch Bänder zusammengehalten werden.

5. Klimagerät nach Anspruch 3 oder 4, **dadurch gekennzeichnet, dass** eine Schale (20, 24) in einem Grenzbereich, in dem sie an eine andere Schale (24, 20) angrenzt, jeweils eine Rasteinrichtung (26, 27) aufweist, derart, dass die beiden Schalen (20, 24) zusammen verrastbar sind.

6. Klimagerät nach Anspruch 5, **dadurch gekennzeichnet, dass** die Rasteinrichtung eine aus dem Kunststoffmaterial einstückig mit der zugehörigen Schale (20, 24) ausgebildete Zunge (27) und/oder Nut (26)aufweist.

7. Klimagerät nach einem der Ansprüche 1 bis 6, **dadurch gekennzeichnet, dass** die Halterung (20, 24) Ausnehmungen (21, 22) und/oder Führungen aufweist, in denen die Bauelemente (1, 3, 4, 8, 9, 10) im Wesentlichen formschlüssig gehalten sind.

8. Klimagerät nach einem der Ansprüche 1 bis 7, **dadurch gekennzeichnet, dass** die Bauelemente (1, 3, 4, 8, 9, 10) in den Ausnehmungen und/oder Führungen, bedingt durch die elastischen Eigenschaften des Kunststoffmaterials, federnd gehalten sind.

9. Klimagerät nach einem der Ansprüche 1 bis 8, **dadurch gekennzeichnet, dass** die Halterung (20, 24, 25) ein Gehäuse des Klimageräts bildet.

10. Klimagerät nach einem der Ansprüche 3 bis 9, **dadurch gekennzeichnet, dass** die Schalen Gehäuseschalen (20, 24, 25) sind.

11. Klimagerät nach einem der Ansprüche 1 bis 10, **dadurch gekennzeichnet, dass** die Halterung (20, 24, 25) nicht von einem weiteren Gehäuse, insbesondere nicht von einem Gehäuse aus Blech oder Kunststoff umgeben ist.

12. Klimagerät nach einem der Ansprüche 3 bis 11, **dadurch gekennzeichnet, dass** wenigstens ein Teil einer Innenseite von wenigstens einer Schale (25) einen Teil eines Luftführungskanals für die Umgebungsluft oder die Raumluft bildet.

13. Klimagerät nach einem der Ansprüche 1 bis 12, **dadurch gekennzeichnet, dass** das Verflüssiger-Gebläse (4) und das Verdampfer-Gebläse (10) durch einen gemeinsamen Antrieb (23) angetrieben werden, der in der Halterung (20, 24) gehalten wird.

14. Klimagerät nach einem der Ansprüche 3 bis 13, **dadurch gekennzeichnet, dass** eine der Schalen eine Unterschale (20) ist, an deren Unterseite Öffnungen (5, 6) zum Zu- und Abführen der Umgebungsluft vorgesehen sind.

15. Klimagerät nach einem der Ansprüche 3 bis 14, **dadurch gekennzeichnet, dass** eine der Schalen eine Unterschale (20) ist, in der eine Kondensatwanne ausgebildet ist.

16. Klimagerät nach einem der Ansprüche 1 bis 15, **dadurch gekennzeichnet, dass** das Klimagerät als eine Einheit in einer mobilen Einrichtung, insbesondere einem Reisemobil oder einem Wohnwagen einbaubar ist.

17. Klimagerät nach einem der Ansprüche 1 bis 16, **dadurch gekennzeichnet, dass** der Strömungsweg des Kältemittels derart veränderbar ist, dass der Verflüssiger (3) und der Verdampfer (9) ihre Funktion tauschen und das Klimagerät als Wärmepumpe zum Erwärmen des Raumes arbeitet.
